# EUROPEAN PATENT SPECIFICATION

(11) **EP 3 221 421 B1**
(45) Date of publication and mention of the grant of the patent: **26.06.2019**
(21) Application number: 15808484.8
(22) Date of filing: 10.11.2015
(51) Int. Cl.: C09K 11/02, C09K 11/08, G01N 25/56

(54) **QUANTUM DOT ARTICLE WITH THIOL-ALKENE MATRIX**
QUANTENPUNKTARTIKEL MIT THIOL-ALKEN-MATRIX
ARTICLE À POINTS QUANTIQUES AVEC MATRICE THIOL-ALCÈNE

(30) Priority: 17.11.2014 US 201462080488 P; 22.07.2015 US 201562195434 P
(43) Date of publication of application: 27.09.2017
(73) Proprietor: 3M Innovative Properties Company, St. Paul, MN 55133-3427 (US)
(72) Inventor: QIU, Zai-Ming, Saint Paul, MN 55133-3427 (US); PIEPER, Joseph, M., Saint Paul, MN 55133-3427 (US); NELSON, Eric, W., Saint Paul, MN 55133-3427 (US)
(74) Representative: Herzog, Fiesser & Partner Patentanwälte PartG mbB
(86) International application number: PCT/US2015/059826
(87) International publication number: WO 2016/081219

(56) References cited:
- US-A1- 2012 223 291
- US-A1- 2013 345 458

## Description

### Background

Quantum Dot Enhancement Films (QDEF) are used as the light source for LCD displays. Red and green quantum dots are used in QDEF with a blue LED as the light source to give the full spectrum of colors. This has the advantage of improving the color gamut over the typical LCD display and keeping the energy consumption low compared to LED displays.

Quantum dot film articles include quantum dots dispersed in a matrix that is laminated between two barrier layers. The quantum dot articles, which include combinations of green and red quantum dots as fluorescing elements, can enhance color gamut performance when used in display devices such as, for example, liquid crystal displays (LCDs).

Quantum dots are highly sensitive to degradation, so the quantum dot article should have excellent barrier properties to prevent ingress of, for example, water and oxygen. The barrier layers protect the quantum dots in the interior regions of the laminate construction from damage caused by oxygen or water exposure, but the cut edges of the article expose the matrix materials to the atmosphere. In these edge regions the protection of the quantum dots dispersed in the matrix is primarily dependent on the barrier properties of the matrix itself.

If water and/or oxygen enter the edge regions of the quantum dot article, the quantum dots on or adjacent to the exposed edge of the laminate construction can degrade and ultimately fail to emit light when excited by ultraviolet or visible light below the emissiom wavelength of the quantum dots. This type of quantum dot degradation, referred to as edge ingress, can cause a dark line around a cut edge of the film article, which can be detrimental to performance of a display in which the quantum dot article forms a part.

US2012/223291A1 discloses a quantum dot film article in a quantum-dot based photodetector.

### Summary

In general, the present disclosure is directed to matrix formulations for use in quantum dot articles. The matrix formulations resist ingress from water and/or oxygen, while also providing acceptable color stability upon aging. In one embodiment, the present disclosure is directed to a film article including a first barrier layer; a second barrier layer; and a quantum dot layer between the first barrier layer and the second barrier layer. The quantum dot layer includes quantum dots dispersed in a matrix including a cured thiol-alkenyl resin.

More particularly, the thiol-alkene matrix is the cured reaction product of a polythiol and a polyalkenyl compound (polyalkene), at least one of which has a functionality of > 2.

With the thiol-alkene matrix, edge ingress of the converted parts is observed to not exceed 1 mm after 100+ hours of accelerated aging. In various embodiments, the matrix materials described in this disclosure limit the edge ingress after aging in 65°C at 95% relative humidity or 85°C conditions to less than 0.5 mm, and have a color change that does not exceed 0.02, or even 0.005, in both x and y from the initial measurement in the 1931 CIE coordinate system. These matrix formulations can extend the useful life of the quantum dot articles in display applications.

As used herein
"thiol-alkene" refers to the reaction mixture of a polythiol and a polyalkene compound having two or more alkenyl groups, and is used exclusive from thiol-ene reactions with alkynes and (meth)acrylates.

"Alkyl" means a linear or branched, cyclic or acylic, saturated monovalent hydrocarbon.

"Alkylene" means a linear or branched unsaturated divalent hydrocarbon.

"Alkenyl" means a linear or branched unsaturated hydrocarbon.

"Aryl" means a monovalent aromatic, such as phenyl, naphthyl and the like.

"Arylene" means a polyvalent, aromatic, such as phenylene, naphthalene, and the like.

"Aralkylene" means a group defined above with an aryl group attached to the alkylene, e.g., benzyl, 1-naphthylethyl, and the like.

As used herein, "(hetero)hydrocarbyl" is inclusive of hydrocarbyl alkyl and aryl groups, and heterohydrocarbyl heteroalkyl and heteroaryl groups, the later comprising one or more catenary (in-chain) heteroatoms such as ether or amino groups. Heterohydrocarbyl may optionally contain one or more catenary (in-chain) functional groups including ester, amide, urea, urethane, and carbonate functional groups. Unless otherwise indicated, the non-polymeric (hetero)hydrocarbyl groups typically contain from 1 to 60 carbon atoms. Some examples of such heterohydrocarbyls as used herein include, but are not limited to, methoxy, ethoxy, propoxy, 4-diphenylaminobutyl, 2-(2'-phenoxyethoxy)ethyl, 3,6-dioxaheptyl, 3,6-dioxahexyl-6-phenyl, in addition to those described for "alkyl", "heteroalkyl", and "aryl" *supra.*

The term "composite particle" as used herein refers to a nanoparticle, which is typically in the form of a core/shell nanoparticle (preferably, nanocrystal), having any associated organic coating or other material on the surface of the nanoparticle that is not removed from the surface by ordinary solvation. Such composite particles are useful as "quantum dots," which have a tunable emission in the near ultraviolet (UV) to far infrared (IR) range as a result of the use of a semiconductor material.

The term "nanoparticle" refers to a particle having an average particle diameter in the range of 0.1 to 1000 nanometers such as in the range of 0.1 to 100 nanometers or in the range of 1 to 100 nanometers. The term "diameter" refers not only to the diameter of substantially spherical particles but also to the distance along the smallest axis of the structure. Suitable techniques for measuring the average particle diameter include, for example, scanning tunneling microscopy, light scattering, and transmission electron microscopy.

A "core" of a nanoparticle is understood to mean a nanoparticle (preferably, a nanocrystal) to which no shell has been applied or to the inner portion of a core/shell nanoparticle. A core of a nanoparticle can have a homogenous composition or its composition can vary with depth inside the core. Many materials are known and used in core nanoparticles, and many methods are known in the art for applying one or more shells to a core nanoparticle. The core has a different composition than the one more shells. The core typically has a different chemical composition than the shell of the core/shell nanoparticle.

As used herein, the term "actinic radiation" refers to radiation in any wavelength range of the electromagnetic spectrum. The actinic radiation is typically in the ultraviolet wavelength range, in the visible wavelength range, in the infrared wavelength range, or combinations thereof. Any suitable energy source known in the art can be used to provide the actinic radiation.

### Brief Description of the Drawings

FIG. 1 is a schematic side elevation view of an edge region of an illustrative film article including quantum dots.
FIG. 2 is a flow diagram of an illustrative method of forming a quantum dot film.
FIG. 3 is a schematic illustration of an embodiment of a display including a quantum dot article.

### Detailed Description

The present disclosure provides a quantum dot film article comprising a first barrier layer, a second barrier layer; and a quantum dot layer between the first barrier layer and the second barrier layer, the quantum dot layer comprising quantum dots dispersed in a matrix comprising a cured thiol-alkene having a T_{g} > 20°C.

The cured thiol-alkene matrix or binder is the reaction product of a polythiol compound a polyalkene compound wherein at least one has a functionality of > 2. Preferably both the polythiol compound and polyalkene compound has a functionality of > 2.

The polythiol reactant in the thiol-alkene resin is of the formula:

R²(SH)_{y}, I

where R² is (hetero)hydrocarbyl group having a valence of y, and y is ≥ 2, preferably > 2. The thiol groups of the polythiols may be primary or secondary. The compounds of Formula I may include a mixture of compounds having an average functionality of two or greater.
R² includes any (hetero)hydrocarbyl groups, including aliphatic and aromatic polythiols. R² may optionally further include one or more functional groups including pendent hydroxyl, acid, ester, or cyano groups or catenary (in-chain) ether, urea, urethane and ester groups.

In one embodiment, R² comprises a non-polymeric aliphatic or cycloaliphatic moiety having from 1 to 30 carbon atoms. In another embodiment, R² is polymeric and comprises a polyoxyalkylene, polyester, polyolefin, polyacrylate, or polysiloxane polymer having pendent or terminal reactive -SH groups. Useful polymers include, for example, thiol-terminated polyethylenes or polypropylenes, and thiol-terminated poly(alkylene oxides) .

Specific examples of useful polythiols include 2,3-dimercapto-1-propanol, 2-mercaptoethyl ether, 2-mercaptoethyl sulfide, 1,6-hexanedithiol, 1,8-octanedithiol, 1,8-dimercapto-3,6-dithiaoctane, propane-1,2,3-trithiol, and trithiocyanuric acid.

Another useful class of polythiols includes those obtained by esterification of a polyol with a terminally thiol-substituted carboxylic acid (or derivative thereof, such as esters or acyl halides) including α- or β-mercaptocarboxylic acids such as thioglycolic acid, β-mercaptopropionic acid, 2-mercaptobutyric acid, or esters thereof.

Useful examples of commercially available compounds thus obtained include ethylene glycol bis(thioglycolate), pentaerythritol tetrakis(3-mercaptopropionate), dipentaerythritol hexakis(3-mercaptopropionate),ethylene glycol bis(3-mercaptopropionate), trimethylolpropane tris(thioglycolate), trimethylolpropane tris(3-mercaptopropionate), pentaerythritol tetrakis(thioglycolate), pentaerythritol tetrakis(3-mercaptopropionate), pentaerithrytol tetrakis (3-mercaptobutylate), and 1,4-bis 3-mercaptobutylyloxy butane, tris[2-(3-mercaptopropionyloxy]ethyl]isocyanurate, trimethylolpropane tris(mercaptoacetate), 2,4-bis(mercaptomethyl)-1,3, 5,-triazine-2, 4-dithiol, 2, 3-di(2-mercaptoethyl)thio)-1-propanethiol, dimercaptodiethylsufide, and ethoxylated trimethylpropan-tri(3-mercaptopropionate.

A specific example of a polymeric polythiol is polypropylene ether glycol bis(3-mercaptopropionate) which is prepared by esterification of polypropylene-ether glycol (e.g., Pluracol™ P201, BASF Wyandotte Chemical Corp.) and 3-mercaptopropionic acid by esterification.

Useful soluble, high molecular weight thiols include polyethylene glycol di(2-mercaptoacetate), LP-3™ resins supplied by Morton Thiokol Inc. (Trenton, NJ), and Permapol P3 ™ resins supplied by Products Research & Chemical Corp. (Glendale, CA) and compounds such as the adduct of 2-mercaptoethylamine and caprolactam.

The curable composition contains a polyalkene compound having at least two reactive alkene groups. Such compounds are of the general formula:

R¹-[-CR¹⁰=CHR¹¹]ₓ, II

where
R¹ is a polyvalent (hetero)hydrocarbyl group,
each of R¹⁰ and R¹¹ are independently H or C₁-C₄ alkyl;
and x is ≥ 2. The compounds of Formula II may include vinyl ethers.

In some embodiments, R¹ is an aliphatic or aromatic group. R¹ can be selected from alkyl groups of 1 to 20 carbon atoms or aryl aromatic group containing 6-18 ring atoms. R¹ has a valence of x, where x is at least 2, preferably greater than 2. R¹ optionally contains one or more esters, amide, ether, thioether, urethane, or urea functional groups. The compounds of Formula I may include a mixture of compounds having an average functionality of two or greater. In some embodiments, R¹⁰ and R¹¹ may be taken together to form a ring.

In some embodiments, R¹ is a heterocyclic group. Heterocyclic groups include both aromatic and non-aromatic ring systems that contain one or more nitrogen, oxygen and sulfur heteroatoms. Suitable heteroaryl groups include furyl, thienyl, pyridyl, quinolinyl, tetrazolyl, imidazo, and triazinyl. The heterocyclic groups can be unsubstituted or substituted by one or more substituents selected from the group consisting of alkyl, alkoxy, alkylthio, hydroxy, halogen, haloalkyl, polyhaloalkyl, perhaloalkyl (e.g., trifluoromethyl), trifluoroalkoxy (e.g., trifluoromethoxy), nitro, amino, alkylamino, dialkylamino, alkylcarbonyl, alkenylcarbonyl, arylcarbonyl, heteroarylcarbonyl, aryl, arylalkyl, heteroaryl, heteroarylalkyl, heterocyclyl, heterocycloalkyl, nitrile and alkoxycarbonyl.

In some embodiments, the alkene compound is the reaction product of a mono- or polyisocyanate: 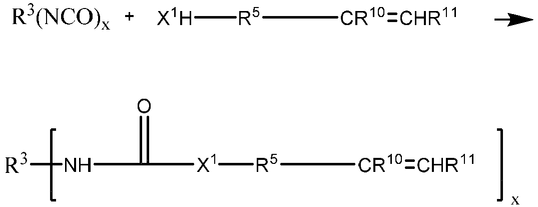 where
R³ is a (hetero)hydrocarbyl group;
X¹ is -O-, -S- or -NR⁴-, where R⁴ is H of C₁-C₄ alkyl;
each of R¹⁰ and R¹¹ are independently H or C₁-C₄ alkyl;
R⁵ is a (hetero)hydrocarbyl group,
x is ≥ 2.

In particular R⁵ may be alkylene, arylene, alkarylene, aralkylene, with optional in-chain heteratoms. R⁵ can be selected from alkyl groups of 1 to 20 carbon atoms or aryl aromatic group containing 6-18 ring atoms. R² has a valence of x, where x is at least 2, preferably greater than 2. R¹ optionally contains one or more ester, amide, ether, thioether, urethane, or urea functional groups.

Polyisocyanate compounds useful in preparing the alkene compounds comprise isocyanate groups attached to the multivalent organic group that can comprise, in some embodiments, a multivalent aliphatic, alicyclic, or aromatic moiety (R³); or a multivalent aliphatic, alicyclic or aromatic moiety attached to a biuret, an isocyanurate, or a uretdione, or mixtures thereof. Preferred polyfunctional isocyanate compounds contain at least two isocyanate (-NCO) radicals. Compounds containing at least two -NCO radicals are preferably comprised of di- or trivalent aliphatic, alicyclic, aralkyl, or aromatic groups to which the -NCO radicals are attached.

Representative examples of suitable polyisocyanate compounds include isocyanate functional derivatives of the polyisocyanate compounds as defined herein. Examples of derivatives include, but are not limited to, those selected from the group consisting of ureas, biurets, allophanates, dimers and trimers (such as uretdiones and isocyanurates) of isocyanate compounds, and mixtures thereof. Any suitable organic polyisocyanate, such as an aliphatic, alicyclic, aralkyl, or aromatic polyisocyanate, may be used either singlely or in mixtures of two or more.

The aliphatic polyisocyanate compounds generally provide better light stability than the aromatic compounds. Aromatic polyisocyanate compounds, on the other hand, are generally more economical and reactive toward nucleophiles than are aliphatic polyisocyanate compounds. Suitable aromatic polyisocyanate compounds include, but are not limited to, those selected from the group consisting of 2,4-toluene diisocyanate (TDI), 2,6-toluene diisocyanate, an adduct of TDI with trimethylolpropane (available as Desmodur™ CB from Bayer Corporation, Pittsburgh, PA), the isocyanurate trimer of TDI (available as Desmodur™ IL from Bayer Corporation, Pittsburgh, PA), diphenylmethane 4,4'-diisocyanate (MDI), diphenylmethane 2,4'-diisocyanate, 1,5-diisocyanato-naphthalene, 1,4-phenylene diisocyanate, 1,3-phenylene diisocyanate, 1-methyoxy-2,4-phenylene diisocyanate, 1-chlorophenyl-2,4-diisocyanate, and mixtures thereof.

Examples of useful alicyclic polyisocyanate compounds include, but are not limited to, those selected from the group consisting of dicyclohexylmethane diisocyanate (H₁₂ MDI, commercially available as Desmodur™ available from Bayer Corporation, Pittsburgh, PA), 4,4'-isopropyl-bis(cyclohexylisocyanate), isophorone diisocyanate (IPDI), cyclobutane-1,3-diisocyanate, cyclohexane 1,3-diisocyanate, cyclohexane 1,4-diisocyanate (CHDI), 1,4-cyclohexanebis(methylene isocyanate) (BDI), dimer acid diisocyanate (available from Bayer), 1,3-bis(isocyanatomethyl)cyclohexane (H₆ XDI), 3-isocyanatomethyl-3,5,5-trimethylcyclohexyl isocyanate, and mixtures thereof.

Examples of useful aliphatic polyisocyanate compounds include, but are not limited to, those selected from the group consisting of tetramethylene 1,4-diisocyanate, hexamethylene 1,4-diisocyanate, hexamethylene 1,6-diisocyanate (HDI), octamethylene 1,8-diisocyanate, 1,12-diisocyanatododecane, 2,2,4-trimethyl-hexamethylene diisocyanate (TMDI), 2-methyl-1,5-pentamethylene diisocyanate, dimer diisocyanate, the urea of hexamethylene diisocyanate, the biuret of hexamethylene 1,6-diisocyanate (HDI) (Desmodur™ N-100 and N-3200 from Bayer Corporation, Pittsburgh, PA), the isocyanurate of HDI (available as Desmodur™ N-3300 and Desmodur™N-3600 from Bayer Corporation, Pittsburgh, PA), a blend of the isocyanurate of HDI and the uretdione of HDI (available as Desmodur™ N-3400 available from Bayer Corporation, Pittsburgh, PA), and mixtures thereof.

Examples of useful aralkyl polyisocyanates (having alkyl substituted aryl groups) include, but are not limited to, those selected from the group consisting of m-tetramethyl xylylene diisocyanate (m-TMXDI), p-tetramethyl xylylene diisocyanate (p-TMXDI), 1,4-xylylene diisocyanate (XDI), 1,3-xylylene diisocyanate, p-(1-isocyanatoethyl)phenyl isocyanate, m-(3-isocyanatobutyl)phenyl isocyanate, 4-(2-isocyanatocyclohexylmethyl)phenyl isocyanate, and mixtures thereof.

Preferred polyisocyanates, in general, include those selected from the group consisting of 2,2,4-trimethyl-hexamethylene diisocyanate (TMDI), tetramethylene 1,4-diisocyanate, hexamethylene 1,4-diisocyanate, hexamethylene 1,6-diisocyanate (HDI), octamethylene 1,8-diisocyanate, 1,12- diisocyanatododecane, mixtures thereof, and a biuret, an isocyanurate, or a uretdione derivatives.

In some preferred embodiments, the alkene compound is a cyanurate or isocyanurate of the formulas: 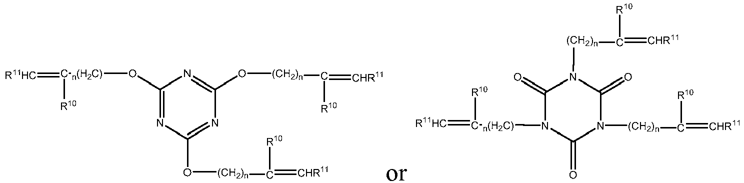
where n is at least one;
each of R¹⁰ and R¹¹ are independently H or C₁-C₄ alkyl.

The polyalkene compounds may be prepared as the reaction product of a polythiol compound and an epoxy-alkene compound. Similarly, the polyalkene compound may be prepared by reaction of a polythiol with a di- or higher epoxy compound, followed by reaction with an epoxy-alkene compound. Alternatively, a polyamino compound may be reacted with an epoxy-alkene compound, or a polyamino compound may be reacted a di- or higher epoxy compound, followed by reaction with an epoxy-alkene compound.

The polyalkene may be prepared by reaction of a bis-alkenyl amine, such a HN(CH₂CH=CH₂), with either a di- or higher epoxy compound, or with a bis- or high (meth)acrylate, or a polyisocyanate.

The polyalkene may be prepared by reaction of a hydroxy-functional polyalkenyl compound, such as (CH₂=CH-CH₂-O)ₙ-R-OH with a polyepoxy compound or a polyisocyanate.

An oligomeric polyalkene may be prepared by reaction between a hydroxyalkyl (meth)acrylate and an allyl glycidyl ether.

In some preferred embodiments, the polyalkene and/or the polythiol compounds are oligomeric and prepared by reaction of the two with one in excess. For example, polythiols of Formula I may be reacted with an excess of polyalkenes of Formula I such that an oligomeric polyalkene results having a functionality of at least two. Conversely an excess of polythiols of Formula I may be reacted with the polyalkenes of Formula II such that an oligomeric polythiol results having a functionality of at least two. The oligomeric polyalkenes and polythiols may be represented by the following formulas, where subscript z is two or greater. R¹, R², R¹⁰, R¹¹, y and x are as previously defined.

In the following formulas, a linear thiol-alkene polymer is shown for simplicity. It will be understood that the pendent ene group of the first polymer will have reacted with the excess thiol, and the pendent thiol groups of the second polymer will have reacted with the excess alkene. 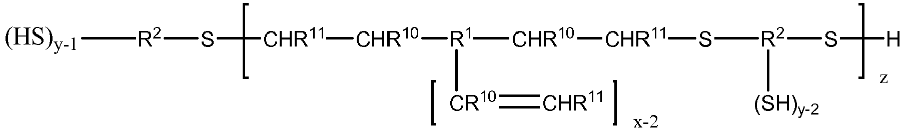 or

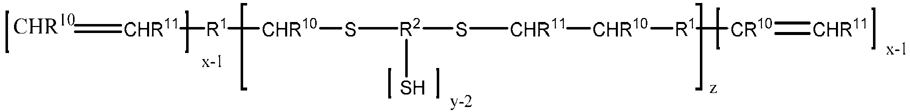

In some embodiments (meth)acrylates are used in the matrix binder composition. In some embodiments, a radiation curable methacrylate compound can increase the viscosity of the matrix composition and can reduce defects that would otherwise be created during the thermal acceleration of the thiol-alkene resin. Useful radiation curable methacrylate compounds have barrier properties to minimize the ingress of water and/or oxygen. In some embodiments, methacrylate compounds with a glass transition temperature (T_{g}) of greater than about 100°C and substituents capable of forming high crosslink densities can provide a matrix with improved gas and water vapor barrier properties. In some embodiments, the radiation curable methacrylate compound is multifunctional, and suitable examples include, but are not limited to, those available under the trade designations SR 348 (ethoxylated (2) bisphenol A di(meth)acrylate), SR540 (ethoxylated (4) bisphenol A di(meth)acrylate), and SR239 (1,6-hexane diol di(meth)acrylate) from Sartomer USA, LLC, Exton, PA.

The (meth)acrylate compound forms about 0 wt% to about 25 wt%, or about 5 wt% to about 25 wt% or about 10 wt% to about 20 wt%, of the matrix composition. In some embodiments, if the methacrylate polymer forms less than 5 wt% of the matrix composition, the (meth)acrylate compound does not adequately increase the viscosity of the matrix composition to provide the thiol-alkene composition with a sufficient working time.

The components are generally used in approximately 1:1 molar amounts of thiol groups to alkene groups, +/- 20%. Therefore, the molar ratio of thiol groups of the polythiol to alkene groups of the polyalkene will be from 1.2:1 to 1:1.2, preferably 1.1:1 to 1:1.1. In embodiments where the thiol-alkene polymer composition further comprises an (meth)acrylate component, the molar functional group equivalent of alkene plus the molar functional group equivalent of (meth)acrylate is equal to the thiol equivalents +/- 20%.

The thiol-alkene resin may be prepared by combining the polythiol and polyalkene in suitable rations and then free-radically cured using a photo, thermal or redox initiator.

The thiol-alkene resin may be cured by exposure to actinic radiation such as UV light. The composition may be exposed to any form of actinic radiation, such as visible light or UV radiation, but is preferably exposed to UVA (320 to 390 nm) or UVV (395 to 445 nm) radiation. Generally, the amount of actinic radiation should be sufficient to form a solid mass that is not sticky to the touch. Generally, the amount of energy required for curing the compositions of the invention ranges from about 0.2 to 20.0 J/cm².

To initiate photopolymerization, the resin is placed under a source of actinic radiation such as a high-energy ultraviolet source having a duration and intensity of such exposure to provide for essentially complete (greater than 80%) polymerization of the composition contained in the molds. If desired, filters may be employed to exclude wavelengths that may deleteriously affect the reactive components or the photopolymerization. Photopolymerization may be affected via an exposed surface of the curable composition, or through the barrier layers as described herein by appropriate selection of a barrier film having the requisite transmission at the wavelengths necessary to effect polymerization.

Photoinitiation energy sources emit actinic radiation, i.e., radiation having a wavelength of 700 nanometers or less which is capable of producing, either directly or indirectly, free radicals capable of initiating polymerization of the thiol-alkene compositions. Preferred photoinitiation energy sources emit ultraviolet radiation, i.e., radiation having a wavelength between about 180 and 460 nanometers, including photoinitiation energy sources such as mercury arc lights, carbon arc lights, low, medium, or high pressure mercury vapor lamps, swirl-flow plasma arc lamps, xenon flash lamps ultraviolet light emitting diodes, and ultraviolet light emitting lasers. Particularly preferred ultraviolet light sources are ultraviolet light emitting diodes available from Nichia Corp., Tokyo Japan, such as models NVSU233A U385, NVSU233A U404, NCSU276A U405, and NCSU276A U385.

In one embodiment, the initiator is a photoinitiator and is capable of being activated by UV radiation. Useful photoinitiators include e.g., benzoin ethers such as benzoin methyl ether and benzoin isopropyl ether, substituted benzoin ethers, substituted acetophenones such as 2,2-dimethoxy-2-phenylacetophenone, and substituted alphaketols. Examples of commercially available photoinitiators include Irgacure™ 819 and Darocur™1173 (both available form Ciba-Geigy Corp., Hawthorne, NY), Lucem TPO™ (available from BASF, Parsippany, NJ) and Irgacure™651, (2,2-dimethoxy-1,2-diphenyl-1-ethanone) which is available from Ciba-Geigy Corp. Preferred photoinitiators are ethyl 2,4,6-trimethylbenzoylphenyl phosphinate (Lucirin™ TPO-L) available from BASF, Mt. Olive, NJ, 2-hydroxy-2-methyl-1-phenyl-propan-1-one (IRGACURE 1173™, Ciba Specialties), 2,2-dimethoxy-2-phenyl acetophenone (IRGACURE 651™, Ciba Specialties), phenyl bis(2,4,6-trimethyl benzoyl)phosphine oxide (IRGACURE 819, Ciba Specialties). Other suitable photoinitiators include mercaptobenzothiazoles, mercaptobenzooxazoles and hexaryl bisimidazole.

Examples of suitable thermal initiators include peroxides such as benzoyl peroxide, dibenzoyl peroxide, dilauryl peroxide, cyclohexane peroxide, methyl ethyl ketone peroxide, hydroperoxides, e.g., tert-butyl hydroperoxide and cumene hydroperoxide, dicyclohexyl peroxydicarbonate, 2,2,-azo-bis(isobutyronitrile), and t-butyl perbenzoate. Examples of commercially available thermal initiators include initiators available from DuPont Specialty Chemical (Wilmington, DE) under the VAZO trade designation including VAZO™64 (2,2'-azo-bis(isobutyronitrile)) and VAZO™ 52, and Lucidol™ 70 from Elf Atochem North America, Philadelphia, PA.

The thiol-alkene resins may also be polymerized using a redox initiator system of an organic peroxide and a tertiary amine. Reference may be made to Bowman et al., Redox Initiation of Bulk Thiol-alkene Polymerizations, Polym. Chem., 2013, 4, 1167-1175, and references therein.

Generally, the amount of initiator is less than 5 wt.%, preferably less than 2 wt.%. In some embodiments, there is no added free radical initiator.

If desired, a stabilizer or inhibitor may be added to the thiol-alkene composition to control the rate of reaction. The stabilizer can be any known in the art of thiol-alkene resins and include the N-nitroso compounds described in US 5358976 (Dowling et al.) and in US 5208281 (Glaser et al.), and the alkenyl substituted phenolic compounds described in US 5459173 (Glaser et al.).

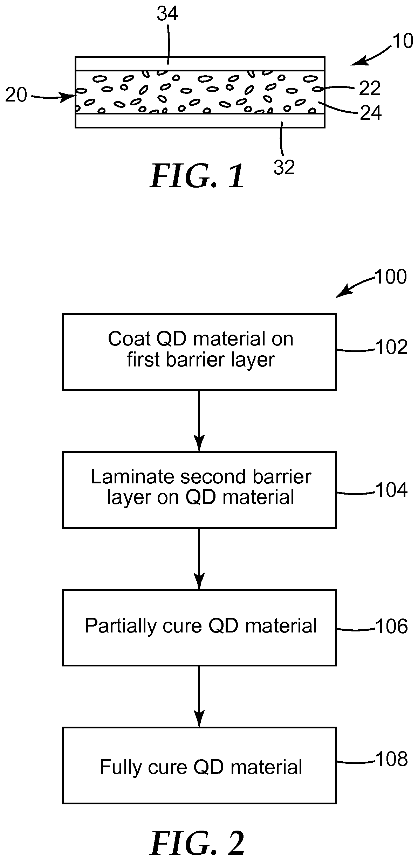

Referring to FIG. 1, quantum dot article 10 includes a first barrier layer 32, a second barrier layer 34, and a quantum dot layer 20 between the first barrier layer 32 and the second barrier layer 34. The quantum dot layer 20 includes a plurality of quantum dots 22 dispersed in a matrix 24.

The barrier layers 32, 34 can be formed of any useful material that can protect the quantum dots 22 from exposure to environmental contaminates such as, for example, oxygen, water, and water vapor. Suitable barrier layers 32, 34 include, but are not limited to, films of polymers, glass and dielectric materials. In some embodiments, suitable materials for the barrier layers 32, 34 include, for example, glass and polymers such as polyethylene terephthalate (PET), PEN, polethers, or PMMA; oxides such as silicon oxide, titanium oxide, or aluminum oxide (e.g., SiO₂, Si₂O₃, TiO₂, or Al₂O₃); and suitable combinations thereof. The barrier layers are desirable at least 90%, preferably at least 95%, transmissive to the selected wavelength of incident and emitted radiation.

More particularly, barrier films can be selected from a variety of constructions. Barrier films are typically selected such that they have oxygen and water transmission rates at a specified level as required by the application. In some embodiments, the barrier film has a water vapor transmission rate (WVTR) less than about 0.005 g/m²/day at 38°C. and 100% relative humidity; in some embodiments, less than about 0.0005 g/m²/day at 38°C. and 100% relative humidity; and in some embodiments, less than about 0.00005 g/m²/day at 38°C and 100% relative humidity. In some embodiments, the flexible barrier film has a WVTR of less than about 0.05, 0.005, 0.0005, or 0.00005 g/m²/day at 50 °C and 100% relative humidity or even less than about 0.005, 0.0005, 0.00005 g/m²/day at 85 °C and 100% relative humidity. In some embodiments, the barrier film has an oxygen transmission rate of less than about 0.005 g/m²/day at 23°C and 90% relative humidity; in some embodiments, less than about 0.0005 g/m²/day at 23 °C and 90% relative humidity; and in some embodiments, less than about 0.00005 g/m²/day at 23 °C and 90% relative humidity.

Exemplary useful barrier films include inorganic films prepared by atomic layer deposition, thermal evaporation, sputtering, and chemical vapor deposition. Useful barrier films are typically flexible and transparent. In some embodiments, useful barrier films comprise inorganic/organic. Flexible ultra-barrier films comprising inorganic/organic multilayers are described, for example, in U.S. 7,018,713 (Padiyath et al.). Such flexible ultra-barrier films may have a first polymer layer disposed on polymeric film substrate that is overcoated with two or more inorganic barrier layers separated by at least one second polymer layer. In some embodiments, the barrier film comprises one inorganic barrier layer interposed between the first polymer layer disposed on the polymeric film substrate and a second polymer layer 224.

Optionally, the barrier films comprise one or more primer layers for further improved barrier performance as well as adhesion of quantum dots layer on barrier layers. However, with the thiol-alkene matrix, primer layers are not required.

In some embodiments, each barrier layer 32, 34 of the quantum dot article 10 includes at least two sub-layers of different materials or compositions. In some embodiments, such a multi-layered barrier construction can more effectively reduce or eliminate pinhole defect alignment in the barrier layers 32, 34, providing a more effective shield against oxygen and moisture penetration into the matrix 24. The quantum dot article 10 can include any suitable material or combination of barrier materials and any suitable number of barrier layers or sub-layers on either or both sides of the quantum dot layer 20. The materials, thickness, and number of barrier layers and sub-layers will depend on the particular application, and will suitably be chosen to maximize barrier protection and brightness of the quantum dots 22 while minimizing the thickness of the quantum dot article 10. In some embodiments each barrier layer 32, 34 is itself a laminate film, such as a dual laminate film, where each barrier film layer is sufficiently thick to eliminate wrinkling in roll-to-roll or laminate manufacturing processes. In one illustrative embodiment, the barrier layers 32, 34 are polyester films (e.g., PET) having an oxide layer on an exposed surface thereof.

The quantum dot layer 20 can include one or more populations of quantum dots or quantum dot materials 22. Exemplary quantum dots or quantum dot materials 22 emit green light and red light upon down-conversion of blue primary light from a blue LED to secondary light emitted by the quantum dots. The respective portions of red, green, and blue light can be controlled to achieve a desired white point for the white light emitted by a display device incorporating the quantum dot article 10. Exemplary quantum dots 22 for use in the quantum dot articles 10 include, but are not limited to, CdSe with ZnS shells. Suitable quantum dots for use in quantum dot articles described herein include, but are not limited to, core/shell luminescent nanocrystals including CdSe/ZnS, InP/ZnS, PbSe/PbS, CdSe/CdS, CdTe/CdS or CdTe/ZnS. In exemplary embodiments, the nanocrystals include an outer ligand coating and are dispersed in a polymeric matrix. Quantum dot and quantum dot materials 22 are commercially available from, for example, Nanosys Inc., Milpitas, CA. The quantum dot layer 20 can have any useful amount of quantum dots 22, and in some embodiments the quantum dot layer 20 can include from 0.1 wt% to 20 wt% quantum dots, based on the total weight of the quantum dot layer 20.

Quantum dots typically have selected molecules, oligomers, or polymers bound to their surfaces, resulting in a desirable local ligand environment for atoms at the surfaces of the quantum dots. Generally, certain ligands are present during the growth process used to synthesize the quantum dots. Often, these ligands are replaced or exchanged at a later time to provide a new ligand environment selected to optimize properties. Ligands perform several functions. They help prevent quantum dots from clustering and quenching, they can improve the chemical stability of the quantum dot surface, and they can improve the emission efficiency of the quantum dots. Ligand systems can include several forms. In general, they can include molecules or functional groups directly bound to quantum dots, and optionally, additional material. In some embodiments the functional silicone provides the requisite ligand functional groups.

In some embodiments the quantum dots may be additionally functionalized with ligand compounds of the formula:

R⁸-(X)ₚ IV

wherein
R⁸ is (hetero)hydrocarbyl group having C₂ to C₃₀ carbon atoms; preferably a linear or branched alkyl of 10 to 30 carbon atoms or a polysiloxane;
p is at least one; preferably at least two
X is an electron-donating group. Preferably X is an amino group or a thiol. Such additional ligands may be added when the functionalizing with the ligands of Formula I. Generally, there are many ligand molecules per nanoparticle. The ligands are in excess of the nanocrystals to insure coverage of the QDs.

In some embodiments, the quantum dot materials can include quantum dots dispersed in a liquid carrier, which may be ligand functional or non-functional. For example, the liquid carrier can include an oil such as an amino-silicone oil. Desirably, the liquid carrier is chosen to match the transmissivity of the polymer matrix. To increase the optical path length through the quantum dot layer and improve quantum dot absorption and efficiency, the difference in the refractive indices of the carrier liquid and the polymer matrix is ≥ 0.05, preferably ≥ 0.1.

The amino-substituted silicone carrier liquid (ligand functional carrier liquid) has the following Formula III: 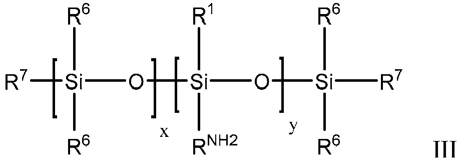 wherein
each R⁶ is independently an alkyl or aryl;
R^{NH2} is a n amine-substituted (hetero)hydrocarbyl group;
x is 1 to 2000; preferably 3 to 100;
y may be zero;
x+y is at least one;
R⁷ is alkyl, aryl or R^{NH2}
wherein amine-functional silicone has at least two R^{NH2} groups.

Useful amino-silicones, and method of making the same, are described in US 2013/0345458 (Freeman et al.). Useful amine-functional silicones are described in Lubkowsha et al., Aminoalkyl Functionalized Siloxanes, Polimery, 2014 59, pp 763-768, and are available from Gelest Inc, Morrisville, PA, from Dow Corning under the Xiameter^{tm}, including Xiamter OFX-0479, OFX-8040, OFX-8166, OFX-8220, OFX-8417, OFX-8630, OFX-8803, and OFX-8822. Useful amine-functional silicones are also available from Siletech.com under the tradenames Silamine^{tm}, and from Momentive.com under the tradenames ASF3830, SF4901, Magnasoft, Magnasoft PlusTSF4709, Baysilone OF-TP3309, RPS-116, XF40-C3029 and TSF4707

An example of a ligand system for CdSe-based quantum dots is a liquid aminosilicone type oil with both bound material and additional material of similar composition. An example of a ligand system for InP-based quantum dots is bound medium chain carboxylic acid species with a solid polymer (e.g., isobornyl methacrylate) as an additional material, or with carboxylate groups in the polymer bonded to the quantum dots as well.

In some embodiments, the ligand system can be a liquid at the time of infiltration, and subsequently converted to a solid by curing, polymerization, or solvent removal. In some embodiments the ligand system may remain liquid to provide droplets of quantum dots dispersed in a carrier liquid, in turn dispersed in a polymer matrix.

In some embodiments the amount of ligand and carrier liquid (ligand functional or non-functional) is ≥ 60 wt.%, preferably ≥70 wt.%, more preferably ≥80 wt.%, relative to the total including the inorganic nanoparticles. In other words, the ligand stabilized quantum dots comprise ≥ 60 wt.% of ligand compound of Formula IV and/or silicone of Formula III, relative to the total weight of the stabilized quantum dots.

In one or more embodiments the quantum dot layer 20 can optionally include scattering beads or particles. These scattering beads or particles have a refractive index that differs from the refractive index of the matrix material 24 by at least 0.05, or by at least 0.1. These scattering beads or particles can include, for example, polymers such as silicone, acrylic, nylon, and the like, or inorganic materials such as TiO₂, SiOₓ, AlOₓ, and the like, and combinations thereof. In some embodiments, including scattering particles in the quantum dot layer 20 can increase the optical path length through the quantum dot layer 20 and improve quantum dot absorption and efficiency. In many embodiments, the scattering beads or particles have an average particle size from 1 to 10 micrometers, or from 2 to 6 micrometers. In some embodiments, the quantum dot material 20 can optionally include fillers such fumed silica.

In some preferred embodiments, the scattering beads or particles are inorganic beads such as Tospearl^{tm} 120A, 130A, 145A and 2000B spherical silicone resins available in 2.0, 3.0, 4.5 and 6.0 micron particle sizes respectively from Momentive Specialty Chemicals Inc., Columbus, Ohio. Other useful scattering particles are organic beads available from Nagase America or from Sekisui Chemicals.

The matrix 24 of the quantum dot layer 20 from the thiol-alkene resin described herein that adheres to the materials forming the barrier layers 32, 34 to form a laminate construction, and also forms a protective matrix for the quantum dots 22. In one embodiment, the matrix 24 is formed by curing the thiol-alkene composition including an optional radiation-curable methacrylate compound.

Referring to FIG. 2, in another aspect, the present disclosure is directed to a method of forming a quantum dot film article 100 including coating a thiol-alkene composition including quantum dots on a first barrier layer 102 and disposing a second barrier layer on the quantum dot material 104. In some embodiments, the method 100 includes polymerizing (e.g., radiation curing) the radiation curable thiol-alkene to form a partially cured quantum dot material 106 and further polymerizing the binder composition to form a cured matrix 108. In some embodiments, the thiol-alkene resin may be fully cured in 106.

In some embodiments, the binder composition can be cured or hardened by heating. In other embodiments, the quantum dot composition may also be cured or hardened by applying radiation such as, for example, ultraviolet (UV) light. Curing or hardening steps may include UV curing, heating, or both. In some example embodiments that are not intended to be limiting, UV cure conditions can include applying about 10 mJ/cm² to about 4000 mJ/cm² of UVA, more preferably about 10mJ/cm² to about 200 mJ/cm² of UVA. Heating and UV light may also be applied alone or in combination to increase the viscosity of the binder composition, which can allow easier handling on coating and processing lines.

The quantum dot composition generally has viscosity of at least 200 cPs, and up to 15,000 cPs, preferably 500 to 10,000 cPs and most preferably between 1000 and 3000 cPs. The desired coatable viscosity is achieved by selection of the associated polythiol and polyalkene.

In some embodiments, the binder composition may be cured after lamination between the overlying barrier films 32, 34. Thus, the increase in viscosity of the binder composition locks in the coating quality right after lamination. By curing right after coating or laminating, in some embodiments the cured binder increases in viscosity to a point that the binder composition acts as an adhesive to hold the laminate together during the cure and greatly reduces defects during the cure. In some embodiments, the radiation cure of the binder provides greater control over coating, curing and web handling as compared to traditional thermal curing.

Once at least partially cured, the binder composition forms polymer network that provides a protective supporting matrix 24 for the quantum dots 22.

Ingress, including edge ingress, is defined by a loss in quantum dot performance due to ingress of moisture and/or oxygen into the matrix 24. In various embodiments, the edge ingress of moisture and oxygen into the cured matrix 24 is less than about 1.0 mm after 1 week at 85°C, or about less than 0.75 mm after 1 week at 85°C, or less than about 0.5 mm after 1 week at 85°C or less than 0.25 mm after 1 week at 85°C. In various embodiments the matrix has a moisture and oxygen ingress of less than about 0.5 mm after 500 hours at 65°C and 95% relative humidity.

In various embodiments, oxygen permeation into the cured matrix is less than about 80 (cc.mil)/(m²day), or less than about 50 (cc.mil)/(m²day). In various embodiments, the water vapor transmission rate of the cured matrix should be less than about 15 (20g/m².mil.day), or less than about 10 (20g/m².mil.day).

In various embodiments, the color change observed upon aging is defined by a change of less than 0.02 on the 1931 CIE (x,y) Chromaticity coordinate system following an aging period of 1 week at 85°C. In certain embodiments, the color change upon aging is less than 0.005 on the following an aging period of 1 week at 85°C. In certain embodiments the matrix has a color shift d(x,y) using the CIE1931 (x,y) convention of less than about 0.02 after 100 hours at 65°C and 95% relative humidity.

The thiol-alkene matrix matrix has a transmissivity of at least 90%, preferably at least 95%, in the spectral region of incident radiation, typically region of 450 + 50 nm.

In various embodiments, the thickness of the quantum dot layer 20 is about 40 microns to about 250 microns.

Contrary to the use of conventional matrices, the quantum efficiency of the dots in the thiol-alkene matrix often exceeds the efficiency of the quantum dots in solution. The quantum dot article can achieve an external quantum efficiency (EQE) > 90% as measured by a Hamamatsu(TM) Quantarus using Nanosys supplied quantum dots. See http://www.hamamatsu.com/us/en/product/alpha/P/5033/index.html

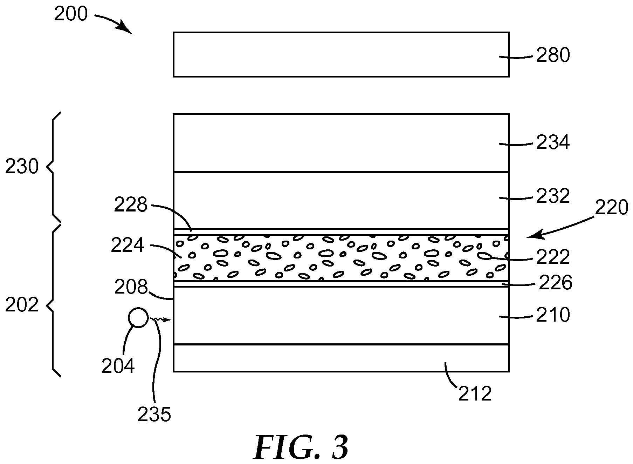

FIG. 3 is a schematic illustration of an embodiment of a display device 200 including the quantum dot articles described herein. This illustration is merely provided as an example and is not intended to be limiting. The display device 200 includes a backlight 202 with a light source 204 such as, for example, a light emitting diode (LED). The light source 204 emits light along an emission axis 235. The light source 204 (for example, a LED light source) emits light through an input edge 208 into a hollow light recycling cavity 210 having a back reflector 212 thereon. The back reflector 212 can be predominately specular, diffuse or a combination thereof, and is preferably highly reflective. The backlight 202 further includes a quantum dot article 220, which includes a protective matrix 224 having dispersed therein quantum dots 222. The protective matrix 224 is bounded on both surfaces by polymeric barrier films 226, 228, which may include a single layer or multiple layers.

The display device 200 further includes a front reflector 230 that includes multiple directional recycling films or layers, which are optical films with a surface structure that redirects off-axis light in a direction closer to the axis of the display, which can increase the amount of light propagating on-axis through the display device, this increasing the brightness and contrast of the image seen by a viewer. The front reflector 230 can also include other types of optical films such as polarizers. In one non-limiting example, the front reflector 230 can include one or more prismatic films 232 and/or gain diffusers. The prismatic films 232 may have prisms elongated along an axis, which may be oriented parallel or perpendicular to an emission axis 235 of the light source 204. In some embodiments, the prism axes of the prismatic films may be crossed. The front reflector 230 may further include one or more polarizing films 234, which may include multilayer optical polarizing films, diffusely reflecting polarizing films, and the like. The light emitted by the front reflector 230 enters a liquid crystal (LC) panel 280. Numerous examples of backlighting structures and films may be found in, for example, U.S. Publication No. US 8848132 (Epstein et al.).

### Examples

**Materials**

| *Designation* | *Description* | *Source* |
|---|---|---|
| PETMP-1 | Pentaerythritoltetra(3-mercaptopropionate), [C(CH₂OC(O)CH₂CH₂SH)₄, CAS#7575-23-7, MW = 488.66] | TCI America, Portland, Oregon |
| PETMP-2 | Pentaerythritol tetra(3-mercaptopropionate), [C(CH₂OC(O)CH₂CH₂SH)₄, CAS#7575-23-7, MW = 488.66] | Bruno Bock Chemische Fabrik GmbH & Co. KG, Marschacht, Germany |
| TEMPIC | Tris [2-(3-mercaptopropionyloxy)ethyl] Isocyanurate, [CAS#36196-44-8, MW=525.62 (EW=175.206)] | |
| | 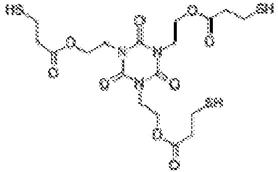 | |
| DPETMP | Dipentaerythritol Hexa-3-Mercaptopropionate [CAS#25359-71-1, MW=783.0] | |
| | 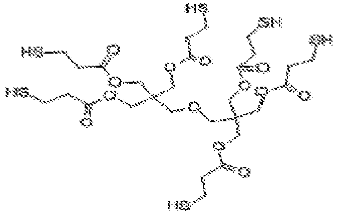 | |
| TAIC | Triallyl Isocyanurate [CAS#1025-15-6, | TCI America, Portland, Oregon |
| | 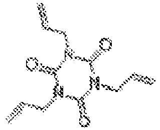 | |
| | MW=249.27] | |
| DABPA-1 | 2,2'-Diallyl Bisphenol A [CAS#1745-89-7, MW=308.41] | Aldrich Chemical Co., Milwaukee, Wisconsin |
| | 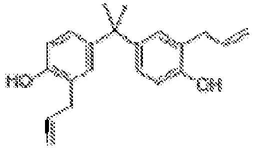 | |
| GDAE | Glycerol α, α'-Diallyl Ether | TCI America, Portland, Oregon |
| DABPA-2 | O, O'-diallyl Bisphenol A, MW=308.41, under trade designation "MATRIMID 5292B" | Huntsman Advanced Materials, The Woodlands, Texas |
| TPO-L | Ethyl - 2,4,6 - trimethylbenzoylphenylphosphinate, is a liquid UV initiator, under trade designation "LUCIRIN TPO-L" | BASF Corporation, Florham Park, New Jersey |
| VAZO-67 | Free radical source | E. I. du Pont de Nemours and Company, Wilmington Delaware, under trade designation "VAZO-67" |
| QD-1 | Green CdSe quantum dots stabilized with amine-functionalized silicone (Part # QCEF53040R2-01, Lot# QCG 101713-24) | Nanosys, Inc., Milpitas, California |
| QD-2 | Green CdSe quantum dots stabilized with amine-functionalized silicone (Part # QCEF53040R2-01, Lot# QCG 101713-26) | |
| QD-3 | Green_CdSe quantum dots stabilized with amine-functionalized silicone (Part # QFEF52335R3-01, Lot# QCG061814-51) | |
| QD-4 | Red_CdSe quantum dots stabilized with amine-functionalized silicone (Part # SRF140422-01, Lot# QCG052814-22) | |
| QD-5 | Red_CdSe quantum dots stabilized with amine-functionalized silicone (Lot# QCG052814-22, Gen-2) | |

### Test Methods

### Method for Thermal Analysis

Thermal analyses were carried out using a Q200 Differential Scanning Calorimeter (TA Instruments, New Castle, Delaware). Differential Scanning Calorimeter (DSC) scans were carried out from -75°C to 150°C at heating rate of 3°C/min. Glass transition temperature (T_{g}) was determined.

### Method for Measuring Quantum Yield (QY)

All quantum yields (EQE) were measured by using an absolute PL Quantum Yield Spectrometer C11347 (Hamamatsu Corporation, Middlesex, New Jersey).

### General Method for Preparing Matrix Coating Formulations

About 20 g of matrix coating formulations for each Examples described below were prepared by mixing a polythiol and a polyene at a desired equivalent ratio and then adding about 1 g of a quantum dot (QD) either containing only green QD or a mixture of green (0.8 g) and red (0.2 g) QDs, and a photo-initiator (1%, ∼0.2g TPO-L), which was fully mixed using a Cowles blade mixer at the speed of 1400 rpm for 2 minutes in a nitrogen box.

Then, the above prepared formulations were knife-coated between two release films (SILPHAN S 36 M, 1R 10003 Clear 152 m, obtained from Siliconature S.P.A., Chicago IL) at a thickness of about 100 µm and cured by exposing the coated film under 385 nm LED UV light (obtained from Clearstone Technologies, Hopkins, Minnesota) for 30 seconds. The coated and cured films were used for thermal analysis as described above.

Further, the above prepared formulations were knife-coated between two 2-mils (50 µm) thick primed PET barrier films (FTB3-M-50, available from 3M Company, St. Paul, Minnesota under trade designation "3M FTB3 BARRIER FILM") at a thickness of about 100 µm and cured by exposing the coated film under 385 nm LED UV light for 30 seconds. The so produced films were used for quantum yield measurements as described above both on as prepared (i.e., initial QY) and after subjecting them to a aging stability study (in 85°C oven for 7 or 10 days).

### Method for preparing Oligomeric Polyene (OP-1)

In a 4 Oz (118.3 mL) bottle was charged 8.15 g PETMP-1 (16.7 mmol), 17.22 g GDAE (100 mmol) and 0.05 g VAZO-67. The solution was bubbled with N₂ gas for 1 minute, then sealed and oligomerized in a 70°C oil bath for 24 hours with magnetic stirring. A higher viscosity PETMP-1/GDAE oligomer in excess GDAE was obtained. FTIR analysis confirmed the consumption of all -SH from PETMP-1.

### Examples 1-6 (EX1-EX-6) and Comparative Examples A to Comparative Example C (CE-A to CE-C)

CE-A was "3M QUANTUM DOT ENHANCEMENT FILM" available from 3M Company, Saint Paul, Minnesota.

CE-B matrix coating formulation was prepared according to the general method for preparing matrix coating formulations described above by using PETMP and GDAE resulting in a low viscosity thiol-ene formulation with lower T_{g} as a control.

CE-C matrix coating formulation was prepared according to the general method for preparing matrix coating formulations described above by using PETMP and OP-1 prepared as described above, resulting in a high viscosity thiol-ene formulation with lower T_{g} as a control.

EX1-EX6 matrix coating formulations were prepared according to the general method for preparing matrix coating formulations described above by using PETMP and TAIC. The nature of QDs used, commercial source of PETMP and the equivalent ratios of PETMP to TAIC were varied. The resulting formulations were coated and tested for thermal analysis and measuring the quantum yields using the methods described above. Table 1, below, summarizes the matrix coating formulations and Tg, QY data (EQE%, Abs%) for each of EX1-EX6 as well as CE-A to CE-C. All cured matrices of EX1-EX6 and CE-C showed good coating quality. CE-B formulation had poor coating quality (i.e., uneven matrix) after curing.

**Table 1**

| **Example** | **Matrix Formulation (Equivalent ratio)** | **CdSe QD** | **Tg, °C** | **EQE%** | **Abs%** |
|---|---|---|---|---|---|
| EX1 | PETMP-1/TAIC (1:1) | QD-1 | 58.0 | 88.2 | 52.4 |
| EX2 | PETMP-1/TAIC (1:1) | QD-2 | 59.0 | 90.1 | 56.3 |
| EX3 | PETMP-1/TAIC (1:1) | QD-2/3 | 61.2 | 91.2 | 57.4 |
| EX4 | PETMP-1/TAIC (1.05:1) | QD-2/3 | 57.7 | 89.4 | 57.9 |
| EX5 | PETMP-1/TAIC (1.10:1) | QD-2/3 | 55.1 | 88 | 46.9 |
| EX6 | PETMP-2/TAIC (1.1:1) | QD-4/5 | 52.8 | 89.2 | 45.1 |
| CE-A | | | N/A | 77.4 | 40.9 |
| CE-B | PETMP-1/GDAE (1:1) | QD-1 | -23.2 | 90.7 | 51.6 |
| CE-C | PETMP-1/OP-1 (1:1) | QD-1 | -21.5 | 89.4 | 34.8 |

The EX1-EX6 and CE-A samples were aged in an 85°C oven for 7 or 10 days and the aged samples were tested again for QY and edge ingress using methods described above. Table 2, below, summarizes the aging time, EQE% and edge ingress data for EX1-EX6 and CE-A.

**Table 2**

| **Example** | **Days at 85°C** | **EQE%** | **Edge Ingress, mm** |
|---|---|---|---|
| EX1 | 7 | 86.9 | <0.5 |
| EX2 | 7 | 87.8 | <0.5 |
| EX3 | 10 | 86.8 | <0.5 |
| EX4 | 10 | 87.8 | <0.5 |
| EX5 | 10 | 86.2 | <0.5 |
| EX6 | 7 | 84.8 | <0.5 |
| CE-A | 7 | 74.3 | 0.75 |
| CE-B | 7 | 77.5 | 1.5 |
| CE-C | 7 | 77.3 | 1.5 |

### Examples 7-12 (EX7-EX12) and Comparative Example A (CE-A)

EX7-EX12 were prepared in the same manner as EX1-EX6 except that the matrix formulations and the QDs used were varied as summarized in Table 3, below. Table 3, below, summarizes the matrix coating formulations and Tg, QY data (EQE%, Abs%) for each of EX7-EX12 and CE-A. EX7-EX12 matrices showed good coating quality after curing.

**Table 3**

| **Example** | **Matrix Formulation (Equivalent ratio)** | **CdSe QD** | **Tg, °C** | **EQE%** | **Abs%** |
|---|---|---|---|---|---|
| EX7 | TEMPIC/TAIC (1:1) | QD-2/3 | 49.71 | 91.8 | 50.7 |
| EX8 | TEMPIC/TAIC (1:1) | QD-2/3 | 52.59 | 91.1 | 57.6 |
| EX9 | TEMPIC/TAIC (0.95:1) | QD-2/3 | 51.78 | 90.2 | 56.1 |
| EX10 | TEMPIC/TAIC (1.05:1) | QD-2/3 | 53.52 | 90.6 | 56.9 |
| EX11 | TEMPIC/TAIC (1.1:1) | QD-2/3 | 49.77 | 91.2 | 59.7 |
| EX12 | TEMPIC/TAIC (1.1:1) | QD-4/5 | 47.71 | 90.1 | 45 |
| CE-A | | | N/A | 77.4 | 40.9 |

The EX7-EX12 and CE-A samples were aged in an 85°C oven for 7 or 10 days and the aged samples were tested again for QY and edge ingress using methods described above. Table 4, below, summarizes the aging time, EQE%, Abs% and edge ingress data for EX7-EX12 and CE-A.

**Table 4**

| **Example** | **Days at 85°C** | **EQE%** | **Abs%** | **Edge Ingress, mm** |
|---|---|---|---|---|
| EX7 | 7 | 89.4 | 51.6 | 0.25 |
| EX8 | 10 | 84.9 | 58.4 | 0.25 |
| EX9 | 10 | N/A | N/A | 0.25 |
| EX10 | 10 | 85.5 | 58.4 | 0.25 |
| EX11 | 10 | 89.0 | 60.7 | 0.25 |
| EX12 | 7 | 85.8 | 46.4 | 0.25 |
| CE-A | 7 | 74.3 | 38.6 | 0.75 |

### Example 13 (EX13)

EX13 was prepared in the same manner as EX7 except that the matrix formulations used polythiol with higher crosslink degree, DPETMP, as summarized in Table 5, below. The coating showed great quality. Table 5, below, summarizes the matrix coating formulations and Tg, QY data (EQE%, Abs%) for EX13.

**Table 5**

| **Example** | **Matrix Formulation (Equivalent ratio)** | **CdSe QD** | **Tg, °C** | **EQE%** | **Abs%** |
|---|---|---|---|---|---|
| EX13 | DPETMP/TAIC (1:1) | QD-2/3 | 73.25 | 89.4 | 46.8 |

After aging at 85°C for 7 days EX13 sample demonstrated high stability of QY and very low edge ingress as shown in Table 6, below.

**Table 6**

| **Example** | **Days at 85°C** | **EQE%** | **Abs%** | **Edge Ingress, mm** |
|---|---|---|---|---|
| EX13 | 7 | 87.9 | 47.1 | <<0.25 |

### Examples 14-17 (EX14-EX17)

EX14-EX17 were prepared in the same manner as EX1-EX6 except that the matrix formulations and the QDs used were varied as summarized in Table 7, below. EX14-EX17 matrices showed great coating quality after curing. Table 7, below, summarizes the matrix coating formulations and Tg, QY data (EQE%, Abs%) for each of EX14-EX17.

**Table 7**

| **Example** | **Matrix Formulation (Equivalent ratio)** | **CdSe QD** | **Tg, °C** | **EQE%** | **Abs%** |
|---|---|---|---|---|---|
| EX14 | PETMP-1/DABPA-1 (1:1) | QD-1 | N/A | 84.5 | 54.1 |
| EX15 | TEMPIC/DABPA-1 (1:1) | QD-2/3 | 28.77 | 80.6 | 44.9 |
| EX16 | PETMP-1/DABPA-2 (1:1) | QD-2/3 | 28.91 | 84.7 | 50.1 |
| EX17 | TEMPIC/DABPA-2 (1:1) | QD-2/3 | 32.13 | 88.7 | 49.8 |

After aging at 85°C for 7 days EX15 and EX16 samples demonstrated high stability of QY and very low edge ingress as shown in Table 8, below.

**Table 8**

| **Example** | **Days at 85°C** | **EQE%** | **Abs%** | **Edge Ingress, mm** |
|---|---|---|---|---|
| EX15 | 7 | 81.89 | 44.6 | <<0.25 |
| EX16 | 7 | 86.2 | 50.5 | ∼0 |

### Examples 18-19 (EX18-EX19)

EX18-EX19 were prepared in the same manner as previous Examples except that the matrix formulations and the QDs used were varied as summarized in Table 9, below. EX18-EX19 matrices showed great coating quality after curing. Table 9, below, summarizes the matrix coating formulations and Tg, QY data (EQE%, Abs%) for each of EX18-EX19.

**Table 9**

| **Example** | **Matrix Formulation (Equivalent ratio)** | **CdSe QD** | **Tg, °C** | **QY%** | **Abs%** |
|---|---|---|---|---|---|
| EX18 | PETMP-1/TEMPIC/TAIC (1:1:2) | QD-2/3 | 55.08 | 88.9 | 49.4 |
| EX19 | PETMP-1/DABPA-2/TAIC (2:1:1) | QD-2/3 | 46.76 | 84.5 | 47.0 |

After aging at 85°C for 7 days EX18-EX19 samples demonstrated high stability of QY and very low edge ingress as shown in Table 10, below.

**Table 10**

| **Example** | **Days at 85°C** | **QY%** | **Abs%** | **Edge Ingress, mm** |
|---|---|---|---|---|
| EX18 | 7 | 88.2 | 48.4 | 0.25 |
| EX19 | 7 | 83.8 | 46.8 | <<0.25 |

## Claims

1. A quantum dot film article comprising:
a first barrier layer;
a second barrier layer; and
a quantum dot layer between the first barrier layer and the second barrier layer, the quantum dot layer comprising quantum dots stabilized with organic ligand and dispersed in functionalized silicone carrier liquid, said stabilized quantum dots dispersed in a matrix comprising a cured thiol-alkene resin having a T_{g} > 20°C.

2. The quantum dot film article of claim 1 wherein the functionalized silicone is a amine-functional silicone.

3. The quantum dot film article of claim 1 wherein the functionalized silicone comprises > 60 wt.% of the stabilized quantum dots.

4. The quantum dot film article of claim 1 wherein the ligand is of the formula:
R⁸-(X)ₚ IV
wherein
R⁸ is (hetero)hydrocarbyl group having C₂ to C₃₀ carbon atoms; preferably a linear or branched alkyl of 10 to 30 carbon atoms or a polysiloxane;
p is at least one; preferably at least two
X is an electron-donating group.

5. The article of claim 1 wherein the thiol-alkene is derived from at least one polythiol and at least one polyalkene, wherein at least one of which has a functionality > 2.

6. The article of claim 5 wherein the polyalkene is of the formula:
R¹-[-CR¹⁰=CHR¹¹]ₓ,
where
R¹ is a polyvalent (hetero)hydrocarbyl group,
each of R¹⁰ and R¹¹ are independently H or C₁-C₄ alkyl;
and x is ≥ 2.

7. The article of claim 5 wherein the polythiol is of the formula:
R²(SH)_{y}, where R² is (hetero)hydrocarbyl group having a valence of y, and y is ≥ 2.

8. The article of any of the preceding claims wherein the thiol-alkene matrix has a transmissivity of at least 90% in the region of 450 ± 50 nm.

9. The article of any of the preceding claims wherein the quantum dots are selected from CdSe/ZnS and InP/ZnS.

10. The film article of any of the preceding claims, wherein the stoichiometric ratio of thiol groups to alkene groups is 1.2:1 to 1:1.2.

11. The film article of any of the preceding claims, wherein the matrix further comprises scattering particles having an average size in a range from 1 to 10 micrometers.

12. The film article of any of the preceding claims, wherein the matrix has a moisture and oxygen ingress of less than about 0.5 mm after 500 hours at 65°C and 95% relative humidity.

13. The film article of any of the preceding claims, wherein the matrix has a color shift d(x,y) using the CIE1931 (x,y) convention of less than about 0.02 after 100 hours at 65°C and 95% relative humidity.

14. The film article of any of the preceding claims, having an external quantum efficiency (EQE) > 90%

15. A display device comprising the film article of any of the preceding claims.

## Patentansprüche

1. Quantenpunktfolienartikel, der Folgendes umfasst:
eine erste Barriereschicht;
eine zweite Barriereschicht; und
eine Quantenpunktschicht zwischen der ersten Barriereschicht und der zweiten Barriereschicht, wobei die Quantenpunktschicht Quantenpunkte umfasst, die mit organischen Liganden stabilisiert sind und in funktionalisierter Silikonträgerflüssigkeit dispergiert sind, wobei die in einer Matrix dispergierten stabilisierten Quantenpunkte ein gehärtetes Thiolalkenharz mit einem T_{g} > 20 °C umfassen.

2. Quantenpunktfolienartikel nach Anspruch 1, wobei das funktionalisierte Silikon ein amin-funktionelles Silikon ist.

3. Quantenpunktfolienartikel nach Anspruch 1, wobei das funktionalisierte Silikon zu > 60 Gew.-% die stabilisierten Quantenpunkte umfasst.

4. Quantenpunktfolienartikel nach Anspruch 1, wobei der Ligand von folgender Formel ist:
R⁸-(X)ₚ IV
worin
R⁸ für eine (Hetero)hydrocarbylgruppe mit C₂- bis C₃₀-Kohlenstoffatomen steht; vorzugsweise eine geradkettige oder verzweigte Alkylgruppe mit 10 bis 30 Kohlenstoffatomen oder ein Polysiloxan;
p mindestens eins beträgt; vorzugsweise mindestens zwei,
X eine elektronenabgebende Gruppe ist.

5. Artikel nach Anspruch 1, wobei das Thiolalken abgeleitet ist von mindestens einem Polythiol und mindestens einem Polyalken, wobei mindestens eines davon eine Funktionalität > 2 aufweist.

6. Artikel nach Anspruch 5, wobei das Polyalken die folgende Formel aufweist:
R¹-[-CR¹⁰=CHR¹¹]ₓ,
worin
R¹ für eine mehrwertige (Hetero)hydrocarbylgruppe steht,
jedes von R¹⁰ und R¹¹ unabhängig H oder C₁-C₄-Alkyl ist;
und x ≥ 2 ist.

7. Artikel nach Anspruch 5, wobei das Polythiol die folgende Formel aufweist:
R²(SH)_{y}, worin R² eine (Hetero)hydrocarbylgruppe mit einer Valenz von y ist, und y ≥ 2 ist.

8. Artikel nach einem der vorstehenden Ansprüche, wobei die Thiolalkenmatrix eine Durchlässigkeit von mindestens 90 % in dem Bereich von 450 ± 50 nm aufweist.

9. Artikel nach einem der vorstehenden Ansprüche, wobei die Quantenpunkte ausgewählt sind aus CdSe/ZnS und InP/ZnS.

10. Folienartikel nach einem der vorstehenden Ansprüche, wobei das stöchiometrische Verhältnis von Thiolgruppen zu Alkengruppen 1,2:1 bis 1:1,2 beträgt.

11. Folienartikel nach einem der vorstehenden Ansprüche, wobei die Matrix ferner Streuteilchen mit einer durchschnittlichen Größe in einem Bereich von 1 bis 10 Mikrometern umfasst.

12. Folienartikel nach einem der vorstehenden Ansprüche, wobei die Matrix eine Feuchtigkeits- und Sauerstoffeindringung von weniger als etwa 0,5 mm nach 500 Stunden bei 65 °C und 95 % relativer Feuchtigkeit aufweist.

13. Folienartikel nach einem der vorstehenden Ansprüche, wobei die Matrix eine Farbverschiebung d(x, y) unter Verwendung der CIE1931 (x, y)-Festlegung von weniger als etwa 0,02 nach 100 Stunden bei 65 °C und 95 % relativer Feuchtigkeit aufweist.

14. Folienartikel nach einem der vorstehenden Ansprüche, mit einer externen Quanteneffizienz (EQE) > 90 %

15. Anzeigegerät, das den Folienartikel nach einem der vorstehenden Ansprüche umfasst.

## Revendications

1. Article en film à points quantiques comprenant :
une première couche barrière ;
une deuxième couche barrière ; et
une couche de points quantiques entre la première couche barrière et la deuxième couche barrière, la couche de points quantiques comprenant des points quantiques stabilisés avec un ligand organique et dispersés dans un liquide véhicule de silicone fonctionnalisée, lesdits points quantiques stabilisés dispersés dans une matrice comprenant une résine thiol-alcène durcie ayant une T_{g} > 20 °C.

2. Article en film à points quantiques selon la revendication 1 dans lequel la silicone fonctionnalisée est une silicone à fonction amine.

3. Article en film à points quantiques selon la revendication 1 dans lequel la silicone fonctionnalisée comprend > 60 % en poids des points quantiques stabilisés.

4. Article en film à points quantiques selon la revendication 1 dans lequel le ligand est de formule :
R⁸-(X)ₚ IV
dans lequel
R⁸ est un groupe (hétéro)hydrocarbyle ayant des atomes de carbone en C₂ à C₃₀ ; de préférence un alkyle linéaire ou ramifié de 10 à 30 atomes de carbone ou un polysiloxane ;
p vaut au moins un ; de préférence au moins deux
X est un groupe donneur d'électrons.

5. Article selon la revendication 1, dans lequel le thiol-alcène est dérivé d'au moins un polythiol et d'au moins un polyalcène, dans lequel au moins un de ceux-ci a une fonctionnalité > 2.

6. Article selon la revendication 5 dans lequel le polyalcène est de formule :
R¹-[-CR¹⁰=CHR¹¹]ₓ,
où
R¹ est un groupe (hétéro)hydrocarbyle polyvalent,
chacun de R¹⁰ et R¹¹ est indépendamment H ou un alkyle en C₁ à C₄ ;
et x est ≥ 2.

7. Article selon la revendication 5 dans lequel le polythiol est de formule :
R²(SH)_{y}, où R² est un groupe (hétéro)hydrocarbyle ayant une valence de y, et y est ≥ 2.

8. Article selon l'une quelconque des revendications précédentes dans lequel la matrice thiol-alcène a une transmissivité d'au moins 90 % dans la région de 450 ± 50 nm.

9. Article selon l'une quelconque des revendications précédentes dans lequel les points quantiques sont choisis parmi CdSe/ZnS et InP/ZnS.

10. Article en film selon l'une quelconque des revendications précédentes, dans lequel le rapport stoechiométrique des groupes thiol aux groupes alcène va de 1,2:1 à 1:1,2.

11. Article en film selon l'une quelconque des revendications précédentes, dans lequel la matrice comprend en outre des particules de diffusion ayant une taille moyenne dans une plage allant de 1 à 10 micromètres.

12. Article en film selon l'une quelconque des revendications précédentes, dans lequel la matrice a une pénétration d'humidité et d'oxygène inférieure à environ 0,5 mm après 500 heures à 65 °C et 95 % d'humidité relative.

13. Article en film selon l'une quelconque des revendications précédentes, dans lequel la matrice a un décalage de couleur d(x,y) en utilisant la convention (x,y) de CIE1931 inférieur à environ 0,02 après 100 heures à 65 °C et 95 % d'humidité relative.

14. Article en film selon l'une quelconque des revendications précédentes, ayant une efficacité quantique externe (EQE) > 90 %

15. Dispositif d'affichage comprenant l'article en film selon l'une quelconque des revendications précédentes.
